# FASCICULE DE BREVET EUROPEEN

(11) **EP 3 075 067 B1**
(45) Date de publication et mention de la délivrance du brevet: **06.09.2017**
(21) Numéro de dépôt: 14802920.0
(22) Date de dépôt: 27.11.2014
(51) Int. Cl.: H02M 1/38, H02M 1/08

(54) **CIRCUIT DE COMMANDE POUR CONVERTISSEUR DE PUISSANCE**
STEUERUNGSSCHALTUNG FÜR EINEN LEISTUNGSWANDLER
CONTROL CIRCUIT FOR POWER CONVERTER

(30) Priorité: 27.11.2013 FR 1361689
(43) Date de publication de la demande: 05.10.2016
(73) Titulaire: Commissariat à l'Energie Atomique et aux Energies Alternatives, 75015 Paris (FR)
(72) Inventeur: GREZAUD, Romain, 38360 Sassenage (FR); AYEL, François, 38140 Saint Blaise du Buis (FR); CREBIER, Jean-Christophe, 38690 Bevenais (FR); ROUGER, Nicolas, 31400 Toulouse (FR)
(74) Mandataire: Thibon, Laurent
(86) Numéro de dépôt international: PCT/EP2014/075828
(87) Numéro de publication internationale: WO 2015/078973

(56) Documents cités:
- US-A- 5 929 665
- US-A1- 2004 041 619
- US-A1- 2006 164 867
- US-A1- 2007 085 589
- US-B1- 6 330 172

## Description

### Domaine

La présente description concerne de façon générale les circuits électroniques, plus particulièrement le domaine des convertisseurs de puissance et, encore plus particulièrement, la réalisation d'un circuit de commande pour convertisseur de puissance.

### Exposé de l'art antérieur

Les convertisseurs de puissance sont largement utilisés dans l'industrie électronique.

La présente description concerne plus particulièrement les alimentations comportant, entre deux bornes d'application d'une tension d'entrée de puissance continue ou non, deux interrupteurs en série dont le point milieu est généralement relié à un élément inductif constituant par exemple l'inductance du filtre de sortie, le primaire d'un transformateur, l'inductance d'un moteur électrique...

La présence d'au moins deux interrupteurs en série entre deux bornes d'alimentation nécessite une commande évitant une conduction simultanée de ces deux interrupteurs. Ces interrupteurs sont généralement constitués de transistors à effet de champ, le plus souvent des transistors MOS, des JFETs ou des transistors à effet de champ à très haute mobilité (HEMTs). Cela conduit à prévoir, entre les périodes de conduction respectives des transistors, des "temps morts" pendant lesquels les deux transistors sont bloqués. Durant ces "temps morts", la tension grille-source est inférieure à la tension de seuil du transistor et un courant circule en inverse soit par la diode interne de l'un des transistors s'il en possède une, soit par son canal, soit par une diode externe connectée en antiparallèle. Dans tous les cas, le passage de ce courant en inverse à ces instants engendre des pertes non souhaitées. On cherche donc généralement à réduire le temps mort pendant lequel les deux interrupteurs de puissance sont bloqués.

On a déjà proposé différentes solutions pour réduire ce temps mort. En particulier, la vitesse de commutation variant en fonction du point de fonctionnement du convertisseur et de la température, on cherche à rendre ce temps mort auto-adaptatif pour qu'il soit le plus court possible tout en maintenant une protection contre le court-circuit.

Ces solutions sont toutefois mal adaptées à des convertisseurs de puissance dont les transistors de découpage sont alimentés par une tension relativement élevée (supérieure à 20 V), ou à des convertisseurs de puissance dont les circuits de commande des interrupteurs à découpage sont constitués de transistors à effet de champ.

Le document US 2007/085589 décrit un convertisseur abaisseur dc-dc incluant des circuits de détection d'ouverture de transistors à canal N en série pour réduire les temps morts.

Le document US 2004/041619 décrit un circuit pour empêcher une conduction simultanée de transistors en série.

Le document US 2006/164867 décrit un convertisseur dc-dc équipé d'un circuit de réglage du temps mort.

Le document US 5929665 décrit un convertisseur de puissance dans lequel un circuit détecte les états passants et bloqués de transistors.

Toutes les solutions ci-dessus requièrent des échanges d'information entre les parties (haute et basse) associées aux transistors respectifs.

Les documents US 2012/112775 et US 2013/082741 décrivent des circuits détectant l'état d'un transistor IGBT pour améliorer l'état passant de sa diode interne.

Ces solutions requièrent des miroirs de courant dans les circuits de commande qui sont préjudiciables à l'encombrement et ne sont pas compatibles avec une réalisation en technologie CMOS, notamment SOI.

### Résumé

Un mode de réalisation de la présente description vise à proposer un circuit de commande pour convertisseur de puissance qui pallie tout ou partie des inconvénients des circuits usuels.

Un mode de réalisation de la présente description vise plus particulièrement une solution adaptée à tout circuit de puissance, par exemple, un convertisseur de puissance, dont les interrupteurs de découpage sont constitués de transistors à effet de champ (qu'ils soient ou non réalisés dans une même technologie) avec ou sans diode parasite interne entre drain et source, en série entre deux bornes d'application d'une tension d'alimentation, et pilotés par des circuits de commande constitués eux aussi de transistors à effet de champ (réalisés ou non dans une même technologie).

Un autre mode de réalisation vise plus particulièrement une solution d'adaptation automatique du temps mort de blocage simultané des interrupteurs de puissance, compatible avec les bornes habituellement accessibles dans un étage d'entrée d'un convertisseur de puissance.

Un autre mode de réalisation vise à proposer une solution évitant des miroirs de courant.

Un autre mode de réalisation vise à proposer une solution compatible avec une réalisation du circuit de commande en technologie CMOS.

Ainsi, un mode de réalisation prévoit un circuit de commande d'un premier transistor à effet de champ d'un convertisseur de puissance, destiné à un convertisseur comportant au moins un premier et un second transistor en série entre deux bornes d'application d'une première tension, ledit circuit comportant un circuit de détection de l'ouverture du second transistor.

Plus particulièrement, un mode de réalisation prévoit un circuit de commande d'un premier transistor à effet de champ d'un convertisseur de puissance, destiné à un convertisseur comportant au moins un premier et un second transistor en série entre deux bornes d'application d'une première tension, ledit circuit comportant :
une borne de sortie destinée à être connectée à la grille du premier transistor ; et
une borne d'entrée destinée à être connectée à la source du premier transistor ;
deux transistors de commande en série entre deux bornes d'application, respectivement d'une première tension d'alimentation positive ou nulle par rapport au potentiel présent sur ladite borne d'entrée et d'une deuxième tension d'alimentation négative ou nulle par rapport audit potentiel de la borne d'entrée, le point milieu entre les deux transistors de commande en série étant connecté à la grille du premier transistor ;
une borne de commande destinée à recevoir un signal de commande en fermeture ou en ouverture du premier transistor ;
un circuit de détection d'une variation de la tension drain-source liée à l'ouverture du second transistor, le circuit de détection étant relié à la grille du premier transistor et détectant une variation du courant de grille ou de la tension grille-source du premier transistor quand le circuit de commande est dans un premier mode de fonctionnement, dit de surveillance, dans lequel les deux transistors de commande sont bloqués, plaçant la grille du premier transistor dans un état de haute impédance ; et
un bloc logique de combinaison dudit signal de commande et d'au moins un signal fourni par ledit circuit de détection pour commander en fermeture ou en ouverture chacun des transistors de commande.

Selon un mode de réalisation, le circuit de détection est alimenté entre lesdites deux bornes d'application des première et deuxième tensions d'alimentation.

Selon un mode de réalisation, le circuit de détection comporte au moins un étage comportant un miroir de courant formé de deux transistors MOS dont un transistor a sa source reliée à une borne d'application de la seconde tension d'alimentation, l'autre transistor ayant sa source reliée à la borne de sortie du circuit de commande.

Un mode de réalisation prévoit également un convertisseur de puissance comportant au moins un premier et un second transistor, en série entre deux bornes d'application d'une première tension, dans lequel les premier et second transistors sont chacun commandés par un circuit tel que ci-dessus.

Selon un mode de réalisation :
un premier circuit de commande du premier transistor dont la borne d'entrée est reliée à une desdites bornes d'application de la tension continue ; et
un second circuit de commande du second transistor dont la borne d'entrée est reliée au point milieu de l'association en série des premier et second transistors.

Selon un mode de réalisation, le circuit comporte en outre un circuit de fourniture des signaux de commande des premier et second transistors.

Un mode de réalisation prévoit également un procédé de commande d'un convertisseur, dans lequel une variation de la tension drain-source est détectée au niveau de la grille de chaque transistor.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation schématique, sous forme de blocs, d'un exemple de convertisseur de puissance équipé d'un mode de réalisation d'un circuit de commande des interrupteurs de son étage d'entrée ;
la figure 2 est une représentation plus détaillée d'un mode de réalisation d'une partie du circuit de commande de la figure 1 ;
la figure 3 représente, de façon schématique et partielle, une partie du circuit de commande de la figure 2 ;
les figures 4A et 4B reprennent partiellement des éléments du circuit de la figure 3, appliqués au circuit de commande d'un des interrupteurs de l'étage d'entrée du convertisseur, et illustrent deux configurations de fonctionnement ;
les figures 5A et 5B reprennent partiellement des éléments de la figure 3, appliqués au circuit de commande de l'autre des interrupteurs de l'étage d'entrée du convertisseur, et illustrent deux configurations de fonctionnement ;
les figures 6A, 6B, 6C, 6D, 6E, 6F, 6G et 6H illustrent, sous forme de chronogrammes, un mode de fonctionnement du convertisseur de puissance dans la configuration de la figure 4B ;
les figures 7A, 7B, 7C, 7D, 7E, 7F, 7G et 7H illustrent, sous forme de chronogrammes, un mode de fonctionnement du convertisseur de puissance dans la configuration de la figure 5B ;
les figures 8A, 8B, 8C, 8D, 8E, 8F, 8G et 8H illustrent, sous forme de chronogrammes, un autre mode de fonctionnement du convertisseur de puissance dans la configuration de la figure 4B ;
les figures 9A, 9B, 9C, 9D, 9E, 9F, 9G et 9H illustrent, sous forme de chronogrammes, un autre mode de fonctionnement du convertisseur de puissance dans la configuration de la figure 5B ;
la figure 10 représente schématiquement un mode de réalisation détaillé d'une variante d'un circuit de détection du circuit de la figure 2 ; et
la figure 11 est un schéma bloc illustrant un exemple d'architecture appliqué à la figure 1.

### Description détaillée

De mêmes éléments ont été désignés par de mêmes références aux différentes figures. Par souci de clarté, seuls les éléments utiles à la compréhension des modes de réalisation qui vont être décrits, ont été représentés et seront détaillés. En particulier, le convertisseur de puissance n'a été illustré que par son étage d'entrée, les modes de réalisation décrits étant compatibles avec les réalisations usuelles de convertisseurs de puissance de type alimentation à découpage ou de tout circuit utilisant au moins deux interrupteurs entre deux bornes d'application d'une tension. De plus, la génération de la tension d'alimentation du convertisseur n'a pas non plus été détaillée, les modes de réalisation décrits étant là encore compatibles avec les applications usuelles.

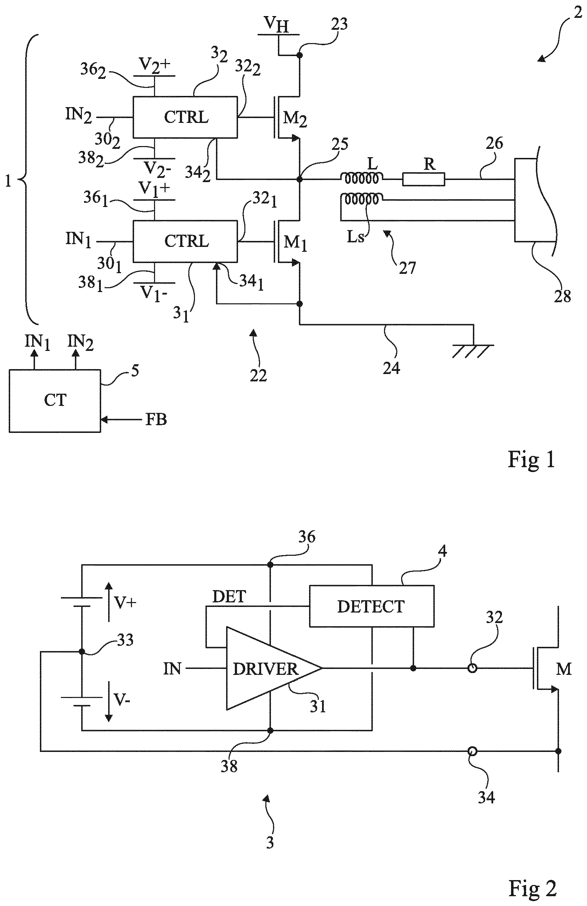

La figure 1 représente, de façon très schématique et sous forme de blocs, un mode de réalisation d'un circuit 1 de commande d'un étage d'entrée 22 d'un convertisseur de puissance 2 de type alimentation à découpage. L'étage d'entrée 22 comporte au moins deux transistors à effet de champ M₂ et M₁, en série entre deux bornes 23 et 24 d'application d'une tension d'alimentation (tension d'entrée de puissance), dans cet exemple d'une tension positive V_{H} par rapport à la masse. La tension d'entrée de puissance peut être approximativement constante à l'échelle de la fréquence de commutation des transistors M₁ et M₂, mais être variable à plus basse fréquence (par exemple, la fréquence 50 Hz du réseau).

Dans l'exemple arbitraire de la figure 1, le point milieu 25 entre les transistors M₂ et M₁ est relié à un élément inductif L dont l'autre électrode définit une borne 26 connectée à un potentiel fixe fonction de l'application, par exemple, la masse. L'élément inductif L est symbolisé avec sa résistance série R. Cet élément inductif constitue, par exemple, le primaire d'un transformateur 27 dont le secondaire est symbolisé par un élément inductif L_{S}, relié à un circuit 28 comportant le secondaire de l'alimentation à découpage. Il s'agit d'un exemple et les modes de réalisation qui vont être décrits s'appliquent, quelle que soit la nature des éléments connectés en aval ou couplés à l'élément inductif L. Dans l'exemple de la figure 1, on a connecté la borne 26 au bloc 28 pour faire ressortir qu'elle est reliée au reste de l'application. La structure illustrée par la figure 1 est communément désignée par convertisseur en demi-pont.

Dans un tel convertisseur, les transistors M₁ et M₂ sont commandés alternativement pour fournir de l'énergie à l'élément inductif L. Chaque transistor M₁, M₂ est commandé par un circuit 3₁, respectivement 3₂, constitué de transistors à effet de champ fournissant, sur une borne 32₁, respectivement 32₂, un signal de commande à sa grille.

On considère un cas particulier dans lequel les circuits 3₁ et 3₂ ont des structures similaires. Pour simplifier la description qui suit et sauf précision contraire, on identifiera avec un indice "1" les éléments du circuit de commande affecté au transistor M₁ du demi-étage bas, et avec un indice "2" les éléments du circuit de commande affecté au transistor M₂ du demi-étage haut, et on mentionnera ces éléments sans indice lorsque l'on se réfère sans distinction aux deux circuits.

Chaque circuit 3 (CTRL) comporte une borne 34 destinée à être reliée à la source du transistor M qu'il commande, donc au noeud 25 pour le circuit 3₂ et à la borne 24 pour le circuit 3₁. Chaque circuit 3 est alimenté par une tension appliquée entre deux bornes 36 et 38. Le potentiel de la borne 34 constitue un potentiel intermédiaire. En d'autres termes, chaque circuit 3 reçoit une tension positive ou nulle V+ par rapport à sa borne 34 et une tension négative ou nulle V- par rapport à sa borne 34. Ces tensions, référencées par rapport à la borne 34 qui correspond à la source du transistor M concerné, sont d'une part liées au besoin de bloquer les transistors M₁ et M₂ avec des tensions inférieures à leurs tensions de seuil Vth pour éviter le risque de conduction parasite qui pourrait autrement se produire suite à des variations des potentiels d'alimentation, et d'autre part liées au besoin de rendre passant les transistors M1 et M2 avec des tensions supérieures à leurs tensions de seuil.

De façon usuelle, les circuits 3 commandent les transistors M₁ et M₂ pour qu'ils aient des phases alternées de conduction. Pour cela, chaque circuit reçoit, sur une borne 30, un signal IN de commande provenant d'un circuit symbolisé par un bloc 5 en figure 1, typiquement contrôlant les périodes de découpage de la tension d'entrée de puissance V_{H} en fonction des besoins de la charge. Le bloc 5 reçoit une information représentative des besoins de la charge sur une ou plusieurs entrées FB. La génération des signaux IN tient compte d'un besoin d'éviter une conduction simultanée des transistors M₁ et M₂ qui court-circuiterait les bornes d'alimentation 23 et 24.

Toutefois, lors du blocage d'un des transistors M (M₁ ou M₂), avant mise en conduction de l'autre (M₂, respectivement M₁), le temps mort nécessaire pour éviter une conduction simultanée engendre des pertes liées à la conduction d'un courant en inverse dans un transistor, en raison d'une tension grille-source inférieure à sa tension seuil. L'amplitude de ce phénomène peut être réduit en rendant rapidement conducteur l'autre transistor (M₂, respectivement M₁) pour réduire ce temps de conduction inverse. Cela revient à réduire le temps mort. Toutefois, cela requiert une auto-adaptation du temps mort entre les périodes de conduction des deux transistors M₁ et M₂ car leurs vitesses de commutation (temps de mise en conduction et temps de blocage) dépendent entre autres du point de fonctionnement commuté et de la température.

On prévoit de détecter, au niveau de la grille de chaque transistor M, donc de la borne 32 du circuit 3 correspondant, l'ouverture de l'autre transistor M et d'exploiter cette détection au niveau de ce même circuit de commande 3 afin de remettre en conduction le transistor M considéré. Ainsi, dès que le circuit de commande 3 du transistor M₁, respectivement M₂, détecte l'ouverture de l'autre transistor M₂, respectivement M₁, il provoque la fermeture du transistor M₁, respectivement M₂. Cela réduit automatiquement le temps mort, donc les pertes. Le temps mort n'est donc plus généré de manière fixe par le bloc 5 de commande éloigné mais de manière auto-adaptative et localement par les circuits 3 (CTRL).

Selon ce mode de réalisation, les circuits 3₁ et 3₂ ne sont pas reliés l'un à l'autre pour se communiquer l'état dans lequel se trouve le transistor qu'ils pilotent respectivement. Cette information haute tension est directement récupérée par chaque circuit 3 au niveau de la grille, du côté basse tension, du transistor qu'il contrôle, supprimant ainsi le besoin de composants haute tension ou d'un dispositif d'isolation supplémentaire.

La figure 2 représente, de façon schématique et sous forme de blocs, un mode de réalisation d'un circuit 3. Pour simplifier, les circuits 3₁ et 3₂ des transistors M₁ et M₂ sont structurellement identiques. Ils diffèrent par le fait qu'ils sont connectés à un transistor différent et, optionnellement, par des tensions V+ et V- qui les alimentent différentes.

Chaque circuit 3 comporte un amplificateur 31 (DRIVER) commandé par des signaux logiques DET et IN. Le signal IN correspond au signal de commande de mise en conduction du transistor considéré, provenant du circuit 5 qui exploite des informations relatives aux besoins de la charge. Le signal DET est un signal de détection. Les signaux IN et DET seront détaillés par la suite. L'amplificateur 31 est alimenté par les tensions V+ et V- d'alimentation du circuit 3 (bornes 36 et 38). La borne 34 est reliée à une borne de référence 33, commune aux tensions V+ et V-. Le circuit 3 comporte en outre un circuit 4 de détection (DETECT) dont un mode de réalisation sera décrit ultérieurement et dont le rôle est de fournir une information DET relative à la commutation de l'autre transistor M₂ ou M₁ que celui associé au circuit 3 considéré. Le circuit 4 est alimenté par les tensions V+ et V-.

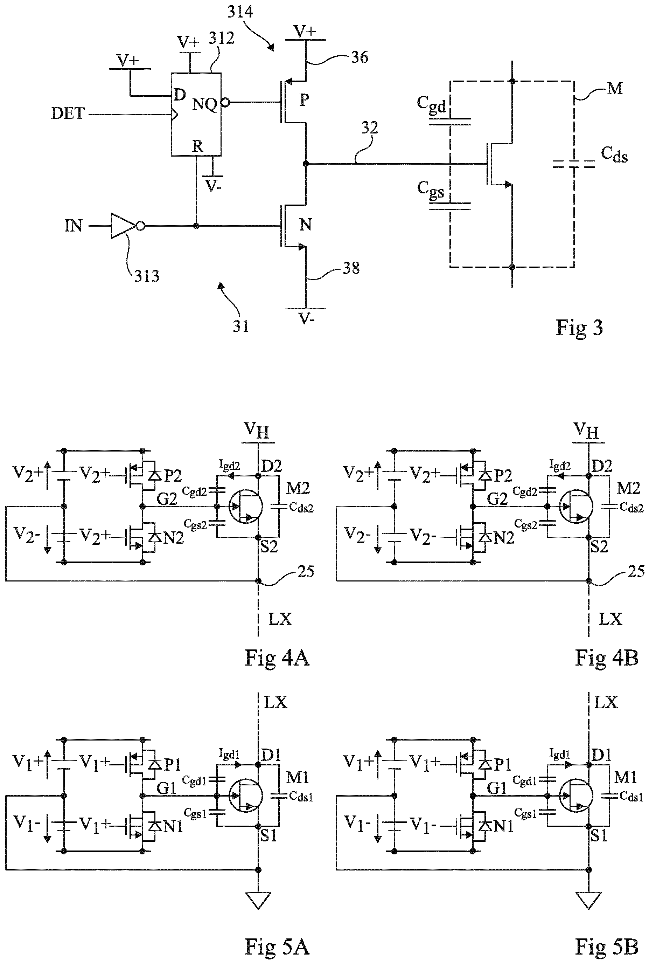

La figure 3 représente, de façon plus détaillée, un exemple de réalisation de l'amplificateur 31. Ce dernier comporte un étage d'entrée 312 formé d'un circuit logique, par exemple une bascule D, dont le rôle est de combiner les états respectifs des signaux IN et DET pour sélectionner l'état d'un étage de sortie 314. Le circuit 312 est alimenté par les tensions V+ et V- et fournit donc un signal dont l'état haut est au niveau V+ et dont l'état bas est au niveau V- (en négligeant les chutes de tensions dans les transistors à l'état passant du circuit 312).

Dans l'exemple de la figure 3, l'entrée D de la bascule 312 reçoit la tension V+, son entrée d'horloge reçoit le signal DET, son entrée R de réinitialisation reçoit l'inverse du signal IN (inverseur 313).

Le circuit 312 fournit le résultat de la combinaison sur la grille d'un premier transistor P d'un étage de sortie 314 du circuit 31. Cet étage de sortie 314 comporte deux transistors, respectivement P à canal P, et N à canal N, en série entre les deux bornes 36 et 38 d'application des potentiels V+ et V-. La grille du transistor N reçoit directement le signal IN inversé. Le point milieu de cette association en série définit la borne 32 de sortie du circuit 3, destinée à être connectée à la grille du transistor M concerné.

Lorsque le signal IN passe à l'état haut, le transistor P reste bloqué jusqu'à ce que l'ouverture de l'autre transistor M soit détectée, que le signal DET passe à l'état haut, validant ainsi le signal IN et donc la fermeture du transistor M considéré. Lorsque le signal IN passe à l'état bas, les transistors P et N deviennent simultanément et instantanément bloqués.

On prévoit une phase de fonctionnement, dite de surveillance, dans laquelle les deux transistors P et N sont bloqués. Cette phase est déclenchée par une commutation du signal IN vers l'état haut, provoquée par le circuit 5, préalablement ou simultanément au blocage du transistor M de l'autre étage par commutation de son signal IN correspondant à l'état bas. Cette phase de surveillance prend fin lorsque le blocage de l'autre transistor M est détecté et que le signal DET bascule à l'état haut.

Lors de l'ouverture du transistor M₁ ou M₂, si le courant dans l'élément inductif L est positif, respectivement négatif, il force le passage en inverse dans le transistor M₁, respectivement M₂. Pour un courant dans l'élément inductif L de n'importe quel signe lorsque le transistor M₁, respectivement M2, s'ouvre, le potentiel au noeud 25 varie et la présence des capacités parasites grille-drain Cgd et grille-source Cgs des transistors M fait qu'un courant circule non seulement à travers la capacité drain-source Cds, mais également au niveau de la grille de l'autre transistor M₂, respectivement M₁ par l'intermédiaire de la capacité grille-drain Cgd. Le circuit 3₂, respectivement 3₁, est alors dans une phase de surveillance (son signal IN est à l'état haut et son signal DET est encore au niveau bas), ce qui place l'étage de sortie 314 dans un état de haute impédance (transistors P et N bloqués). Le circuit 4₂, respectivement 4₁, peut alors détecter ce courant parasite qui renseigne sur l'ouverture du transistor M₁, respectivement M₂. La détection de ce courant par le circuit 4₂, respectivement 4₁, force le signal DET1₂, respectivement DET2₁, vers l'état haut.

La détection de la variation de tension de grille ou du courant circulant dans la grille du transistor M1, respectivement M2, correspond à une variation de la tension drain source de ce transistor M1, respectivement M2, induite par l'ouverture de l'autre transistor.

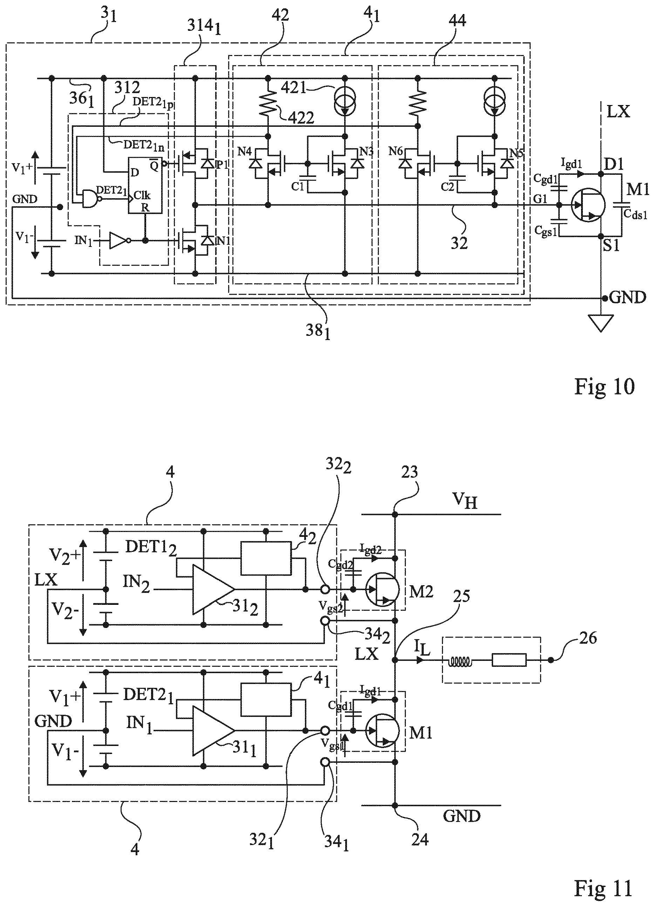

Un mode de réalisation du circuit de détection 4 sera décrit par la suite en relation avec la figure 10. Pour l'instant, on se contente de noter que ce circuit détecte la présence d'un courant dans la grille du transistor M, alors que celui-ci est dans un état bloqué. On détecte soit une variation du courant sur la grille de ce transistor M, soit une variation de sa tension grille-source. Détecter une variation de courant sur la grille ou une variation de tension grille-source est sensiblement équivalent dans le cas où la grille est en haute impédance, en mode de surveillance.

Le sens du courant parasite lors de l'ouverture du transistor M1, respectivement M2, dans les capacités parasites du transistor M₂, respectivement M₁, à l'état ouvert, dépend du sens de variation du potentiel 25 qui dépend du sens de circulation du courant dans l'élément inductif L (figure 1).

Les figures 4A et 4B reprennent, en partie, les éléments de la figure 3 pour illustrer le fonctionnement du circuit 3₂ à l'ouverture du transistor M₁ alors que le courant dans l'élément inductif est positif et circule donc du noeud 25 au noeud 26. La figure 4A illustre la polarisation des transistors P₂ et N₂ en fonctionnement normal. La figure 4B illustre la polarisation des transistors P₂ et N₂ en mode surveillance.

Pour ce qui suit, on néglige les chutes de tension à l'état passant dans les différents transistors, y compris de ceux du détecteur 4 et du circuit logique 312.

En fonctionnement normal, dans l'exemple de la figure 4A où l'on suppose que le transistor M₂ est ouvert, les grilles respectives des transistors P₂ et N₂ sont portées au potentiel positif V₂+. Le transistor P₂ est donc bloqué et le transistor N₂ est passant. A l'ouverture du transistor M₁, un courant parasite négatif Igd₂ circule à travers la capacité grille-drain Cgd₂ du transistor M₂ (du drain à la grille), le transistor N₂, la source de tension V₂- pour atteindre le transistor M₁ (non visible en figure 4A) et évacuer les charges parasites.

Quand le signal IN₂ passe à l'état haut, le circuit 3₂ est placé en mode de surveillance, représenté par la figure 4B, tant que le signal DET fourni par le circuit 4₂ est à l'état bas. Dans ce mode de fonctionnement, le circuit 312 applique directement l'inverse du signal IN₂ (donc un état bas) au transistor N₂ tandis qu'il maintient le niveau haut appliqué à la grille du transistor P₂ jusqu'à la détection de commutation du transistor M₁ marquant la fin de ce mode. Par conséquent, en mode de surveillance, les deux transistors N₂ et P₂ constituant l'étage de sortie 314₂ du circuit 3₂ sont bloqués, l'étage 314₂ est en haute impédance. Au blocage du transistor M₁, le courant parasite circule alors du drain à la source du transistor M₂ par ses capacités grille-drain Cgd₂ et grille-source Cgs₂.

Dans le cas de la figure 4A, le passage du courant parasite négatif Igd₂ n'a quasiment aucun impact sur l'allure de la tension de grille du transistor M₂. Dans le cas de la figure 4B, le courant grille-drain négatif ne peut plus passer par le transistor N2 pour atteindre le potentiel V₂- (sa diode parasite source-drain est polarisée en inverse). Par conséquent, les capacités Cgs₂ et Cgd₂ forment un pont diviseur capacitif et la capacité grille-source se charge et augmente la valeur du potentiel de grille d'une quantité dépendant de l'amplitude de la variation du potentiel au noeud 25 et des valeurs des capacités Cgd₂ et Cgs₂. En fait, à l'ouverture du transistor M₁, on peut considérer, dans le cas d'un transistor à effet de champ M₁ sans diode entre drain et source, que la variation de la tension de grille Vgs₂ vaut dVgs₂ = (Vth₁-Vgs₁).Cgd2/(Cgs₂+Cgd₂), où Vth₁ représente la tension de seuil du transistor M₁. Dans le cas d'un transistor M₁ avec une diode en antiparallèle (interne ou non), la variation de la tension de grille Vgs₂ vaut dVgs₂ = Vf₁.Cgd₂/(Cgs₂+Cgd₂), où Vf₁ représente la chute de tension aux bornes de la diode lors du passage du courant en inverse. On prévoit de détecter cette variation dVgs₂ de la tension de grille du transistor M₂ due au mode particulier de surveillance pour détecter l'ouverture du transistor M₁.

Le fait de placer l'étage de sortie 314 dans un état de haute impédance dans le mode de surveillance, c'est-à-dire dans lequel ses deux transistors sont bloqués, permet d'éviter l'utilisation de miroirs de courant dans cet étage de sortie. De tels miroirs de courants doivent classiquement être réalisés avec des transistors de dimensions importantes afin de limiter la résistance série qu'ils introduisent. La réalisation proposée évite cette contrainte. On gagne ainsi de la place et on accroît les performances de l'étage de sortie.

Ce fonctionnement est similaire, côté circuit 3₁ à l'ouverture du transistor M₂ alors que le courant dans l'élément inductif L est négatif circulant du noeud 26 au noeud 25.

Les figures 5A et 5B reprennent, en partie, les éléments de la figure 3 pour illustrer le fonctionnement du circuit 3₁ à l'ouverture du transistor M₂ alors que le courant dans l'élément inductif est positif et circule du noeud 25 au noeud 26. La figure 5A illustre la polarisation des transistors P₁ et N₁ en fonctionnement normal. La figure 5B illustre la polarisation des transistors P₁ et N₁ en mode surveillance.

En fonctionnement normal, dans l'exemple de la figure 5A où l'on suppose que le transistor M₁ est ouvert, les grilles respectives des transistors P₁ et N₁ sont portées au potentiel positif V₁+. Le transistor P₁ est donc bloqué et le transistor N₁ est passant. A l'ouverture du transistor M₂, un courant parasite Igd₁ positif circule à travers la capacité grille-drain Cgd₁ du transistor M₁ (de la grille au drain), le transistor N₁, la source de tension V₁- pour atteindre le transistor M₂ et évacuer les charges parasites.

Quand le signal IN₁ passe à l'état haut, le circuit 3₁ est placé en mode de surveillance, représenté par la figure 5B, tant que le signal DET fourni par le circuit 4₁ est à l'état bas. Dans ce mode de fonctionnement, le circuit 312 applique directement l'inverse du signal IN₁ (donc un état bas) au transistor N₁ tandis qu'il maintient le niveau haut appliqué à la grille du transistor P₁ jusqu'à la détection de commutation du transistor M₂ marquant la fin de ce mode. Par conséquent, en mode de surveillance, les deux transistors N₁ et P₁ constituant l'étage de sortie 314₁ du circuit 3₁ sont bloqués, l'étage 314₁ est en haute impédance. Lors du blocage du transistor M₂, le courant parasite positif Igd₁ induit passe alors par le transistor N1 en conduction inverse et la grille au drain du transistor M₁ par sa capacité grille-drain Cgd₁.

Dans le cas de la figure 5A, le passage du courant parasite positif Igd₁ n'a quasiment aucun impact sur l'allure de la tension de grille du transistor M₁. Dans le cas de la figure 5B, le courant grille-drain positif ne passe plus par un transistor N1 correctement fermé pour atteindre le noeud 25. Ce courant passe toujours en inverse par le transistor N1 dont la tension grille-source est cette fois inférieure à sa tension seuil Vth₂. La circulation de ce courant induit donc une variation négative dVgs₁ de la tension de grille du transistor M₁ égale à la chute de tension Vf_{N1} aux bornes du composant N1 conduisant le courant parasite Igd₁ en inverse sous le seuil. On prévoit de détecter cette variation dVgs₁ due au mode particulier de surveillance pour détecter l'ouverture du transistor M₂.

Ce fonctionnement est similaire, côté circuit 3₂, à l'ouverture du transistor M₁ alors que le courant dans l'élément inductif L est négatif circulant du noeud 26 au noeud 25.

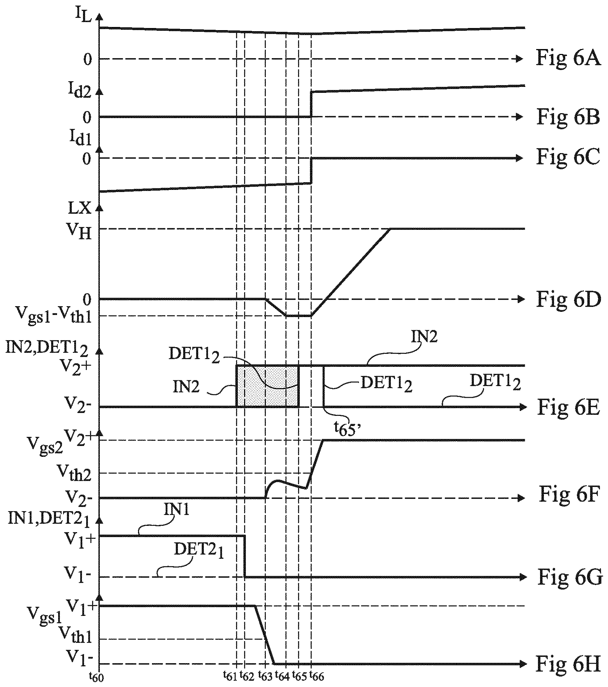

Les figures 6A, 6B, 6C, 6D, 6E, 6F, 6G et 6H illustrent, sous forme de chronogrammes, un exemple de fonctionnement du circuit dans la configuration de la figure 4B, c'est-à-dire de détection de l'ouverture du transistor M1 grâce au mode de surveillance. Les figures 6A à 6H représentent respectivement des exemples d'allures du courant I_{L} dans l'inductance L en supposant une circulation du courant du noeud 25 vers le noeud 26, du courant de drain I_{d2} dans le transistor M₂, du courant de drain I_{d1} dans le transistor M₁, du potentiel LX du noeud 25, des états des signaux IN₂ et DET1₂ où DET1₂ désigne le signal de détection fourni par le circuit 4₂ du circuit 3₂, de la tension grille-source Vgs₂ du transistor M₂, des états des signaux IN₁ et DET2₁ où DET2₁ désigne le signal de détection fourni par le circuit 4₁ du circuit 3₁, et de la tension grille-source Vgs₁ du transistor M₁.

Par la suite, on se place dans le cas arbitraire où les transistors M₁ et M₂ sont des transistors à effet de champ de même technologie et sans diode interne parasite en antiparallèle. Les tensions V₁+ et V₁-, respectivement V₂+ et V₂-, sont assez éloignées de la tension de seuil Vth₁, respectivement Vth₂, de manière à ce que le transistor M₁, respectivement M₂, ait à la fois un bon état passant et un bon état bloqué.

On suppose un état initial (instant t₆₀) dans lequel le transistor M₁ est passant et le transistor M₂ bloqué. Un courant (positif) circule dans l'inductance L (figure 6A). Le transistor M₂ étant bloqué, son courant de drain I_{d2} est nul (figure 6B) ou à un niveau négligeable (faible par rapport au courant traversant le transistor à l'état passant). Un courant (négatif) circule dans le drain du transistor M₁ à l'état passant (figure 6C). La tension LX au noeud 25 est approximativement nulle (figure 6D). Le signal DET1₂ (figure 6E), fourni par le circuit 3₂ et indiquant l'état du transistor M₁ est à l'état bas (V₂-). Le mode de surveillance est désactivé (signal IN₂ à l'état bas (V₂-)). La tension grille-source Vgs₂ (figure 6F) du transistor M₂ est à l'état bas V₂-, inférieure à sa tension de seuil (Vth₂) tandis que celle Vgs₁ (figure 6H) du transistor M1 est à l'état haut V₁+. Le signal IN₁ est à l'état haut (figure 6H) et le signal DET2₁ est à l'état bas.

A un instant t₆₁, le circuit 5 provoque une commutation du circuit 3₂ en mode surveillance en commutant le signal IN₂ à l'état haut alors que le signal DET1₂ est à l'état bas. Cette commutation à l'instant t₆₁ est provoquée par le circuit 5, typiquement, avant le blocage du transistor M₁ mais elle peut aussi avoir lieu au même instant ou après.

A un instant t₆₂, le transistor M₁ reçoit une commande d'ouverture par la commutation du signal IN₁ à l'état bas (figure 6G), provoquant une chute de sa tension grille-source (figure 6H) jusqu'à atteindre le niveau V₁-. Lorsque cette tension devient inférieure à sa tension seuil Vth₁ (instant t₆₃), le transistor M₁ se bloque. Cela entraîne une chute de la tension LX vers une valeur négative Vgs₁-Vth₁ (conduction du courant en inverse sous le seuil du transistor M₁ sans diode de roue libre) atteinte à un instant t₆₄. Entre les instants t₆₃ et t₆₄, la variation du potentiel du noeud 25 fait croître la tension grille-source Vgs₂ du transistor M₂ par le courant parasite circulant dans sa capacité grille-source Cgs2 (voir la figure 4B). On suppose que cette variation est détectée par le circuit 4₂ à un instant t₆₅, postérieur à l'instant t₆₄. Le signal DET1₂ passe alors à l'état haut. Cette information est reçue par le circuit logique 312₂ du circuit 3 de commande du transistor M₂ qui provoque l'arrêt du mode surveillance.

A partir de cet instant, on est sûr que le transistor M₁ est ouvert et le transistor M₂ peut donc être fermé. Le circuit logique 312₂ ferme alors le transistor P₂ qui fait croître la tension grille-source du transistor M₂ et provoque sa fermeture à un instant t₆₆ (figure 6F), où un courant de drain I_{d2} apparaît tandis que celui du transistor M₁ disparaît et que la tension LX commence à croître jusqu'à atteindre approximativement le potentiel V_{H}.

A un instant t₆₅', dépendant de la constitution du circuit 4₂, et quelconque pourvu qu'il soit postérieur à l'instant t₆₅ et antérieur au basculement du signal IN₂ vers l'état bas (non visible aux figures) le signal DET1₂ bascule de nouveau vers l'état bas.

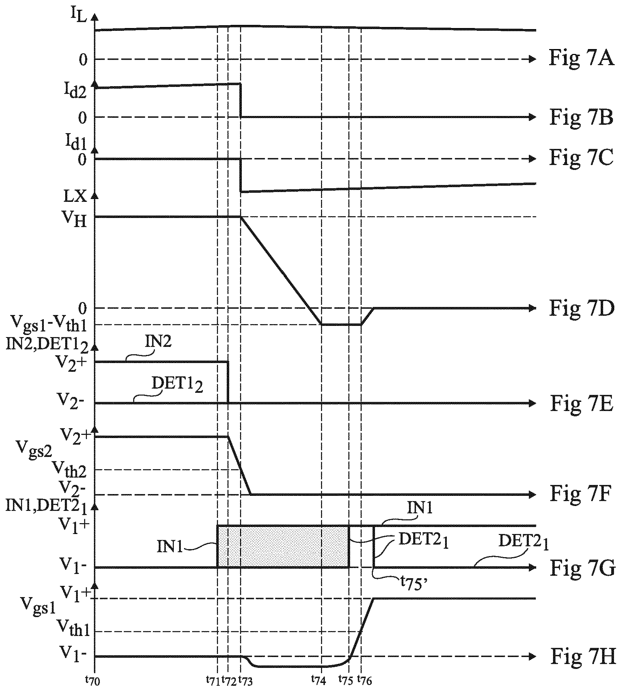

Les figures 7A, 7B, 7C, 7D, 7E, 7F, 7G et 7H reprennent les signaux des figures 6A à 6H et illustrent un exemple de fonctionnement du circuit dans la configuration de la figure 5B. Comme pour les figures 6A à 6H, on suppose que le courant I_{L} dans l'inductance L est positif et circule du noeud 25 vers le noeud 26.

On suppose un état initial (instant t₇₀) correspondant à l'état final des figures 6A à 6H.

A un instant t₇₁, le circuit 5 provoque une commutation du circuit 3₁ en mode surveillance en commutant le signal IN₁ à l'état haut alors que le signal DET2₁ est à l'état bas. Cette commutation à l'instant t₇₁ est provoquée par le circuit 5, typiquement, avant le blocage du transistor M₂ mais elle peut aussi avoir lieu au même instant ou après.

La commande d'ouverture du transistor M₂ à l'instant t₇₂ (commutation à l'état bas du signal IN₂) provoque une chute de sa tension grille-source (figure 7F) jusqu'au niveau V₂-. Lorsque cette tension grille-source Vgs₂ devient inférieure à sa tension seuil Vth₂ (instant t₇₃), le transistor M₂ se bloque. Cela entraîne l'annulation du courant I_{d2} dans le drain du transistor M₂, la conduction du courant en inverse par le transistor M₁ et une chute de la tension LX vers la valeur négative Vgs₁-Vth₁ qu'elle atteint à un instant t₇₄. Entre les instants t₇₃ et t₇₄, la variation du potentiel du noeud 25 fait décroître la tension grille-source Vgs₁ du transistor M₁ par le courant parasite circulant dans sa capacité grille-source Cgs₁ (voir la figure 5B) et dans l'étage de sortie 314₁ du circuit 3₁. On suppose que cette variation est détectée par le circuit 4₁, à un instant t₇₅, faisant passer le signal DET2₁ à l'état haut. Cette information est reçue par le circuit logique 312₁ du circuit 3₁ de commande du transistor M₁ qui provoque immédiatement l'arrêt du mode surveillance.

A partir de cet instant, on est sûr que le transistor M₂ est ouvert et que le transistor M₁ peut donc être fermé. Le circuit logique 312₁ ferme alors le transistor P₁ qui fait croître la tension grille-source du transistor M₁ et provoque sa fermeture à un instant t₇₆ (figure 7H), où la tension LX commence à croître jusqu'à tendre vers une valeur faible, correspondant au produit de la résistance drain-source à l'état passant du transistor par le courant qui le traverse. Pour simplifier, cette valeur est négligée et la figure 7H montre une annulation de la tension LX.

A un instant t₇₅', postérieur à l'instant t₇₅, le signal DET2₁ bascule de nouveau vers l'état bas.

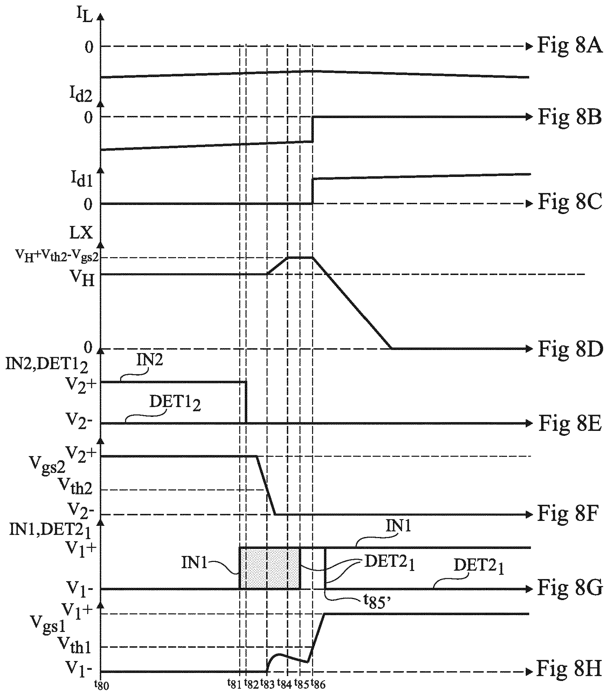

Les figures 8A, 8B, 8C, 8D, 8E, 8F, 8G et 8H sont des chronogrammes à rapprocher des figures 7A à 7H et illustrent la détection, par le circuit 3₁, de l'ouverture du transistor M₂ alors que le courant dans l'inductance L est négatif circulant du noeud 26 au noeud 25. Le fonctionnement se déduit de celui illustré par les figures 7A à 7H en considérant un courant I_{L} négatif. Les instants ont été référencés t₈₀, t₈₁, t₈₂, t₈₃, t₈₄, t₈₅, t₈₅' et t_{86.}

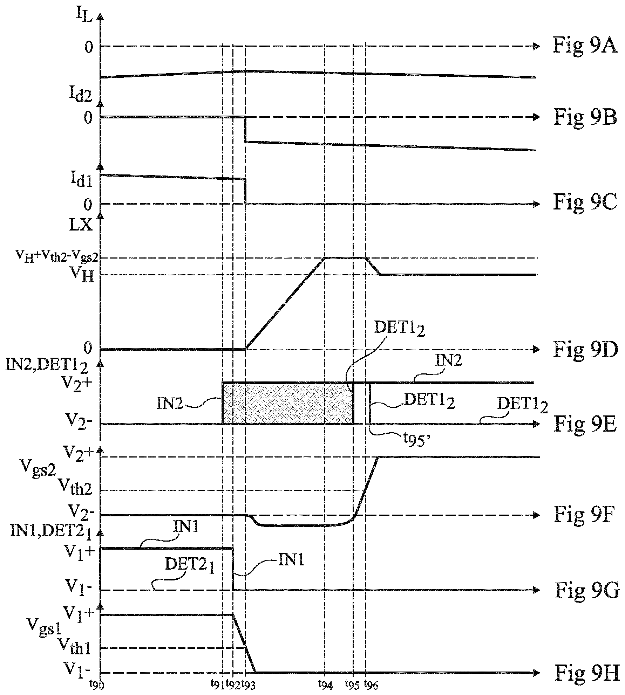

Les figures 9A, 9B, 9C, 9D, 9E, 9F, 9G et 9H sont des chronogrammes à rapprocher des figures 6A à 6H et illustrent la détection, par le circuit 3₂, de l'ouverture du transistor M₁ alors que le courant dans l'inductance L est négatif circulant du noeud 26 au noeud 25. Le fonctionnement se déduit de celui illustré par les figures 6A à 6G en considérant un courant I_{L} négatif. Les instants ont été référencés t₉₀, t₉₁, t₉₂, t₉₃, t₉₄, t₉₅, t_{95'} et t₉₆.

La figure 10 représente un exemple de réalisation d'un circuit 4₁ de détection du courant grille-drain dans le transistor M₁. La figure 10 prend l'exemple du circuit 4₁ affecté au transistor M₁ mais le montage pour le transistor M₂ est similaire, seules les connexions des entrées/sorties changent.

Le circuit 4 se compose d'un détecteur 42 de courant Igd positif, d'un détecteur 44 de courant Igd négatif.

Le circuit 42 comporte deux transistors MOS à canal N, N3 et N4, dont les grilles sont interconnectées. Le transistor N3 est relié, par son drain, à la borne 36₁ d'application du potentiel V₁+ par une source de courant 421 et, par sa source, directement à la borne 38₁. Le transistor N4 est relié, côté drain, à la borne 36₁ par une résistance 422 et, côté source, directement à la borne 32. Un élément capacitif C1 relie grille et source du transistor N3 dont les grille et drain sont interconnectés. Le point milieu entre le transistor N4 et la résistance 422 fournit un signal DET2₁ₙ indicateur de la commutation du transistor M2 pour un courant I_{L} négatif.

Lorsque le transistor M₂ s'ouvre, le courant Igd₁ circule par la diode parasite du transistor N₁ (voir la figure 5B). Le potentiel de la borne 32, donc de la source du transistor N4 décroît tandis que sa grille reste à un même potentiel sous l'effet de la capacité C1. La tension grille-source du transistor N4 se met donc à croître en même temps que la tension grille-source du transistor M₁ décroît. Le déséquilibre engendré au niveau du miroir de courant fait croître le courant dans la branche du transistor N4 qui n'est plus limité par la valeur fixée par la source de courant 421. Cela provoque alors une commutation du drain du transistor N4 qui commute d'un niveau approximativement égal à V₁+ vers un niveau approximativement égal à V₁- (équivalent de la commutation de l'instant t₇₅ à la figure 7G).

Le circuit 44 de détection d'un courant Igd négatif fonctionne selon le même principe et comporte deux transistors N5 et N6 montés en miroir de courant, le drain du transistor N5 étant relié par une source de courant à la borne 36₁. Sa source est reliée à la borne 32. Côté transistor N6, son drain est relié par une résistance 422 à la borne 36₁ et sa source est reliée directement à la borne 38. Les grilles des transistors N5 et N6 sont interconnectées au drain du transistor N5 et reliées, par un élément capacitif C2 à la borne 32. Le point milieu entre la résistance 422 et le transistor N6 fournit un signal DET2₁ₚ indicateur de la commutation du transistor M₂ lorsque le courant IL est positif (instant t₈₅, figure 8G).

Dans un montage du type de celui de la figure 1, on peut se contenter d'un détecteur 42 côté transistor M₂ et d'un détecteur 44 côté transistor M₁ dans la mesure où le sens de circulation des courants est connu.

La figure 11 représente un exemple d'architecture générale détaillant la figure 1. Un circuit 4 est affecté à chaque transistor M₁ et M₂. Les deux circuits 4 de la figure 11 peuvent être différents l'un de l'autre et fournir des signaux DET1₂ et DET2₁ basés soit sur un détecteur de courant parasite négatif 44 (figure 10), soit sur un détecteur de courant positif 42 (figure 10). Toutefois, les deux circuits 4 de la figure 11 peuvent aussi être semblables et être basés sur un détecteur de courant parasite positif et négatif 42 et 44 (figure 10) travaillant en parallèle.

Aux figures précédentes, on a référencé les tensions V₁+ et V₁- différemment des tensions V₂+ et V₂-. Les tensions V+ et V- de chaque circuit pourront toutefois être identiques.

Un avantage des modes de réalisation décrits est qu'il est désormais possible de raccourcir le temps mort entre les commutations des transistors de découpage d'un convertisseur de puissance. Un autre avantage est que le circuit est autonome et ne requiert aucun signal de commande externe. De plus, il ne requiert aucun composant haute tension ni dispositif d'isolation supplémentaire. Ce mode de réalisation est facilement utilisable avec les architectures classiques de circuits de commande utilisant une technologie à base de transistors à effet de champ et est compatible avec tout transistor de découpage à effet de champ.

Un avantage des réalisations décrites est que chaque circuit de commande est autonome en ce sens que les deux circuits de commande respectivement associés à chaque transistor M1, M2 n'ont pas besoin de communiquer entre eux.

Divers modes de réalisation ont été décrits. Diverses variantes et modifications apparaîtront à l'homme de l'art. En particulier, la mise en oeuvre pratique du circuit de commande de convertisseur décrit ci-dessus est à la portée de l'homme du métier à partir des indications fonctionnelles données. En particulier, toute réalisation pratique d'un interrupteur associé au circuit de commande proposé pour détecter une variation de tension entre les bornes haute tension (drain et source) du transistor M au niveau de sa grille dans un domaine basse tension grâce au mode particulier de surveillance et aux détecteurs de courant parasite se déduit de la description fonctionnelle du circuit 3 couplé au transistor M. De plus, bien que l'on ait décrit une réalisation d'étage de sortie 314 du circuit de commande combinant des transistors à canal P et à canal N, cet étage de sortie pourra être réalisé avec deux transistors à canal P ou deux transistors à canal N. Par ailleurs, la réalisation de la combinaison logique des signaux IN et DET avec des portes logiques usuelles se déduit de la description fonctionnelle des états souhaités en sortie des circuits 312 et peut donc varier par rapport à l'exemple de la figure 3. De plus, le choix des niveaux de tension et des valeurs à donner aux composants dépend de l'application. De même, le choix des technologies des transistors à découpage et des transistors du circuit de commande dépend de l'application.

## Revendications

1. Circuit (3) de commande d'un premier transistor à effet de champ (M₁, M₂) d'un convertisseur de puissance, destiné à un convertisseur comportant au moins un premier et un second transistor en série entre deux bornes (23, 24) d'application d'une première tension (V_{H}), ledit circuit comportant :
une borne de sortie (32) destinée à être connectée à la grille du premier transistor (M₁, M₂) ; et
une borne d'entrée (34) destinée à être connectée à la source du premier transistor ;
deux transistors de commande (P, N) en série entre deux bornes (36, 38) d'application, respectivement d'une première tension d'alimentation (V+) positive ou nulle par rapport au potentiel présent sur ladite borne d'entrée (34) et d'une deuxième tension d'alimentation (V-) négative ou nulle par rapport audit potentiel de la borne d'entrée (34), le point milieu entre les deux transistors de commande (P, N) en série étant connecté à la grille du premier transistor (M1) ;
une borne de commande destinée à recevoir un signal (IN) de commande en fermeture ou en ouverture du premier transistor (M₁, M₂) ;
un circuit (4) de détection d'une variation de la tension drain-source liée à l'ouverture du second transistor, le circuit de détection étant relié à la grille du premier transistor et détectant une variation du courant de grille, ou de la tension grille-source, du premier transistor quand le circuit de commande est dans un premier mode de fonctionnement, dit de surveillance, dans lequel les deux transistors de commande (P, N) sont bloqués, plaçant la grille du premier transistor dans un état de haute impédance ; et
un bloc logique (312) de combinaison dudit signal de commande (IN) et d'au moins un signal (DET) fourni par ledit circuit de détection (4) pour commander en fermeture ou en ouverture chacun des transistors de commande.

2. Circuit selon la revendication 1, dans lequel ledit circuit de détection est alimenté entre lesdites deux bornes d'application des première et deuxième tensions d'alimentation.

3. Circuit selon l'une quelconque des revendications 1 et 2, dans lequel le circuit de détection (4) comporte au moins un étage (42, 44) comportant un miroir de courant formé de deux transistors MOS (N3, N4, N5, N6) dont un transistor (N3, N6) a sa source reliée à une borne d'application de la seconde tension d'alimentation, l'autre transistor (N4, N5) ayant sa source reliée à la borne de sortie (32) du circuit de commande.

4. Convertisseur de puissance comportant au moins un premier (M₁) et un second transistor (M₂), en série entre deux bornes (23, 24) d'application d'une première tension (V_{H}), dans lequel les premier et second transistors sont chacun commandés par un circuit (3₁, 3₂) conforme à l'une quelconque des revendications précédentes.

5. Convertisseur selon la revendication 4, comportant :
un premier circuit de commande (3₁) du premier transistor (M₁) dont la borne d'entrée (34₁) est reliée à une desdites bornes d'application de la tension continue (24) ; et
un second circuit de commande (3₂) du second transistor (M₂) dont la borne d'entrée (34₂) est reliée au point milieu (25) de l'association en série des premier et second transistors.

6. Convertisseur selon la revendication 5, comportant en outre un circuit (5) de fourniture des signaux de commande (IN₁, IN₂) des premier (M₁) et second (M₂) transistors.

## Patentansprüche

1. Schaltung (3) zum Steuern eines ersten Feldeffekttransistors (M₁, M₂) eines Leistungswandlers, der für einen Wandler vorgesehen ist, der zumindest einen ersten und einen zweiten Transistor aufweist, die in Reihe zwischen zwei Anschlüssen (23, 24) zum Anlegen einer ersten Spannung (V_{H}) angeschlossen sind, wobei die Schaltung Folgendes aufweist:
einen Ausgangsanschluss (32), der zur Verbindung mit dem Gate bzw. Gatter des ersten Transistors (M₁, M₂) vorgesehen ist; und
einen Eingangsanschluss (34), der zur Verbindung mit der Source des ersten Transistors vorgesehen ist;
zwei Steuertransistoren (P, N), die in Reihe zwischen zwei Anschlüssen (36, 38) zum jeweiligen Anlegen einer ersten Leistungsversorgungsspannung (V+), die positiv oder null bezüglich des Potenzials ist, das am Eingangsanschluss (34) vorhanden ist, und einer zweiten Leistungsversorgungsspannung (V-) angeschlossen ist, die negativ oder null bezüglich des Potenzials des Eingangsanschlusses (34) ist, wobei der Verbindungspunkt der zwei in Reihe verbundenen Steuertransistoren (P, N) mit dem Gate des ersten Transistors (M₁) verbunden ist;
einen Steueranschluss, der vorgesehen ist, um ein Signal (IN) zum Steuern des Anschaltens oder Ausschaltens des ersten Transistors (M₁, M₂) vorgesehen ist;
eine Schaltung (4) zum Detektieren einer Variation der Drain-Source-Spannung aufgrund des Abschaltens des zweiten Transistors, wobei die Detektionsschaltung mit dem Gate des ersten Transistors verbunden ist und eine Variation des Gate-Stroms oder der Gate-Source-Spannung des ersten Transistors detektiert, wenn die Steuerschaltung in einem ersten Betriebsmodus ist, der Überwachungsmodus genannt wird, wobei die zwei Steuertransistoren (P, N) aus sind, was das Gate des ersten Transistors in einen Zustand mit hoher Impedanz bringt; und
einen Logikblock (312) zum Kombinieren des Steuersignals (IN) und des mindestens einen Signal (DET), welches von der Detektionsschaltung (4) geliefert wird, um das Anschalten oder Ausschalten von jedem der Steuertransistoren zu steuern.

2. Schaltung nach Anspruch 1, wobei die Detektionsschaltung zwischen den zwei Anschlüssen zum Anlegen der ersten und zweiten Leistungsversorgungsspannungen mit Leistung versorgt wird.

3. Schaltung nach einem der Ansprüche 1 oder 2, wobei die Detektionsschaltung (4) zumindest eine Stufe (42, 44) aufweist, die einen Stromspiegel aufweist, der aus zwei MOS-Transistoren (N3, N4, N5, N6) mit einem Transistor (N3, N6) geformt wird, dessen Source mit einem Anschluss zum Anlegen der zweiten Leistungsversorgungsspannung verbunden ist, wobei die Source des anderen Transistors (N4, N5) mit dem Ausgangsanschluss (32) der Steuerschaltung verbunden ist.

4. Leistungswandler, der zumindest einen ersten Transistor (M₁) und einen zweiten Transistor (M₂) aufweist, die in Reihe zwischen zwei Anschlüssen (23, 24) zum Anlegen einer ersten Spannung (V_{H}) angeschlossen sind, wobei die ersten und zweiten Transistoren jeweils durch die Schaltung (3₁, 3₂) nach einem der vorhergehenden Ansprüche gesteuert werden.

5. Wandler nach Anspruch 4, der Folgendes aufweist:
eine erste Schaltung (3₁) zum Steuern des ersten Transistors (M₁) dessen Eingangsanschluss (34₁) mit einem der Anschlüsse zum Anlegen der Gleichstromspannung (24) verbunden ist; und
eine zweite Schaltung (3₂) zum Steuern des zweiten Transistors (M₂),
dessen Eingangsanschluss (34₂) mit dem Verbindungspunkt (25) der ersten und zweiten Transistoren verbunden ist.

6. Wandler nach Anspruch 5, der weiter eine Schaltung (5) zum Liefern von Signalen (IN₁, IN₂) aufweist, um die ersten (M₁) und zweiten (M₂) Transistoren zu steuern.

## Claims

1. A circuit (3) for controlling a first field effect transistor (M₁, M₂) of a power converter, intended for a converter comprising at least a first and a second transistor series-connected between two terminals (23, 24) of application of a first voltage (V_{H}), said circuit comprising:
an output terminal (32) intended to be connected to the gate of the first transistor (M₁, M₂) ; and
an input terminal (34) intended to be connected to the source of the first transistor;
two control transistors (P, N) series-connected between two terminals (36, 38) of application, respectively, of a first power supply voltage (V+) which is positive or zero with respect to the potential present on said input terminal (34) and of a second power supply voltage (V-) which is negative or zero with respect to said potential of the input terminal (34), the junction point of the two series-connected control transistors (P, N) being connected to the gate of the first transistor (M₁) ;
a control terminal intended to receive a signal (IN) for controlling the turning on or off of the first transistor (M₁, M₂) ;
a circuit (4) for detecting a variation of the drain-source voltage due to the turning-off of the second transistor, the detection circuit being connected to the gate of the first transistor and detecting a variation of the gate current, or of the gate-source voltage, of the first transistor when the control circuit is in a first operating mode, called monitoring mode, where the two control transistors (P, N) are off, placing the gate of the first transistor in a high-impedance state; and
a logic block (312) for combining said control signal (IN) and at least one signal (DET) supplied by said detection circuit (4) to control the turning on or off of each of the control transistors.

2. The circuit of claim 1, wherein said detection circuit is powered between said two terminals of application of first and second power supply voltages.

3. The circuit of any of claims 1 and 2, wherein the detection circuit (4) comprises at least one stage (42, 44) comprising a current mirror formed of two MOS transistors (N3, N4, N5, N6) having a transistor (N3, N6) having its source connected to a terminal of application of the second power supply voltage, the other transistor (N4, N5) having its source connected to the output terminal (32) of the control circuit.

4. A power converter comprising at least a first (M₁) and a second transistor (M₂), series-connected between two terminals (23, 24) of application of a first voltage (V_{H}), wherein the first and second transistors are each controlled by the circuit (3₁, 3₂) of any of the foregoing claims.

5. The converter of claim 4, comprising:
a first circuit (3₁) for controlling the first transistor (M₁) having its input terminal (34₁) connected to one of said terminals of application of the DC voltage (24); and
a second circuit (3₂) for controlling the second transistor (M₂) having its input terminal (34₂) connected to the junction point (25) of the first and second transistors.

6. The converter of claim 5, further comprising a circuit (5) for supplying signals (IN₁, IN₂) for controlling the first (M₁) and second (M₂) transistors.
